# EUROPEAN PATENT APPLICATION

(11) **EP 4 297 136 A1**
(43) Date of publication of application: **27.12.2023**
(21) Application number: 21866156.9
(22) Date of filing: 13.01.2021
(51) Int. Cl.: H01M 8/1016

(54) **SOLID ELECTROLYTE FOR BATTERIES AND OTHER USES**

(71) Applicant: Diaz-Crespo Valdes, Jorge, 12530 Burriana Cast. de la Plana (ES)
(72) Inventor: Diaz-Crespo Valdes, Jorge, 12530 Burriana Cast. de la Plana (ES)
(86) International application number: PCT/IB2021/050207
(87) International publication number: WO 2022/053877

(57) **Abstract**

The present application refers to a solid electrolyte, which allows the storage and conduction of electrical energy in a highly
safe and, depending on the version, flexible and light. To do this, it comprises an acidic salt, metallic or organic and conductive, and an alkaline salt, also metallic or organic and conductive, in a liquid substrate and applied to a solid substrate, so that the set of salts has apHof7.

## Description

### TECHNIQUE SECTOR

The present application refers to a solid electrolyte, which allows the storage and conduction of electrical energy in a highly safe and, depending on the embodiment, flexible and light medium. It is applied in batteries and 10 other electrical energy storage systems..

### STATE OF THE TECHNIQUE

Current batteries, for example lithium batteries, have a problem with overcharging and heat dissipation. The oxidation of the anode and cathode causes small crystallizations to be created that form an electrical bridge and a short circuit. Discharging through the bridge heats the battery, reduces its efficiency and has even caused explosions.

The next step was the use of lithium batteries with liquid or gel-based electrolytes, but they require more space and expensive and complex graphite protective coatings. Any wear of the coating allows crystals to form again.

These problems can be solved using the indicated invention.

### BRIEF EXPLANATION OF THE INVENTION

The invention consists of a solid electrolyte, which can be applied, in one of its multiple uses, in batteries, according to the first claim. Its different variants solve the problems outlined.

The electrolyte of the invention has the advantage of being as thin as a sheet of paper, thus making the batteries much thinner, and even flexible depending on the substrate used.

These batteries are also highly safe, since they can be damaged (cut, punctured, etc.) without causing more than a corresponding loss of capacity. Likewise, the formation of crystalline bridges is avoided.

With all this, the batteries containing the invention will be able to achieve better efficiency and durability, doubling their qualities, and extremely fast charging.10

This invention can change the concepts known until now about the limits of batteries, especially lithium batteries. They will no longer be as dangerous, they will be more efficient and much longer lasting. Furthermore, by allowing the use of different salts and avoiding expensive coatings, it reduces overconsumption of 15 lithium and reduces the costs of making batteries by between 200% to 400% by not having to have so many complications to make them.

The invention starts from the use of two salts. An acid salt and a basic salt or alkaline, both metallic or organic and conductive. By acid salt we mean a salt that produces an acidic solution after being dissolved in a solvent. Similarly, a basic or alkali salt forms a basic solution (pH>7) or higher.

The two salts are placed on a liquid substrate and stabilized at a pH7. This generates a chemical reaction which generates different monatomic substances derived from the two primary salts, but linked in a molecular way. The result of this reaction is added to substrates such as be a sheet of solid polyvinyl alcohol or liquid polyvinyl alcohol.

It can also be a rigid substrate, such as a plastic or metal sheet or even liquid crystal, providing for the union and mixing with the substrate used in a homogeneous manner.

Other variants are seen in the rest of the memory.

### DESCRIPTION OF THE FIGURES

Figures are not considered necessary for understanding the invention.

### MODES OF EMBODIMENT OF THE INVENTION

Next, a way of carrying out the invention is briefly described, as an illustrative and non-limiting example of it..

The most preferred embodiment of the electrolyte consists of an acidic salt and a basic or alkaline salt, both conductive (ionic bonding) and metallic or organic so that the solution achieves a pH of 7 (neutral). For example, a simple solution consists of potassium hydroxide (KOH) and alum salt (KAl(SO4)2·12H2O).15

These two compounds are arranged on a liquid substrate that acts as a diluent (glycerin, preferably of vegetable origin, polyvinyl alcohol...), this combination generates a chemical reaction that stabilizes the two salts, generating new monatomic compounds linked in a molecular bond,
We see an example of this in the following formula, which uses polyvinyl alcohol:

2KAl(SO₄)₂·12H₂O + 6NaOH + (C₄H₆O₂)ₙ→ 2Al(OH)₃ + K₂SO₄ + 3Na₂SO₄ + 24H₂O+(C₄H₆O₂)ₙ

Where we link the two primary salts, one acidic and the other alkaline, in a liquid substrate of polyvinyl alcohol, thus obtaining a chemical reaction that generates various monatomic substances, derived from the two primary ones but molecularly linked. The layout of this link can be applied on a solid substrate such as an aluminum sheet on which the mixture is applied as layers of paint. It can also be a flexible sheet, thus obtaining flexible batteries..

The fixing of the electrical connections to the electrolyte (anode and cathode of the battery) is done in a traditional way, without the need to modify the design,
so this electrolyte can easily replace the known state of the art.

The invention requires being kept in a sealed envelope from outside air,
The sun and outside air, like all plastic or rubber, affects its performance and efficiency. It can also shrink due to external degradation. If it comes into contact with water, it will be diluted without leaving residue, making it biodegradable and compatible with the environment. environment. Likewise, the invention, in its painting form, can be covered with a varnish. protector or similar and be used effectively outdoors by remaining protected. The invention can have a rubbery, polymeric, solid, glassy texture, and will depend on the substrate with which the mixture of the two primary salts is made.

## Claims

1. Solid electrolyte for batteries and other applications, **characterized in that** comprises an acidic, metallic or organic, conductive salt, and a salt alkaline, also metallic or organic and conductive, in a liquid substrate and applied on a solid substrate, so that the set of salts has pH 7.

2. Solid electrolyte, according to claim 1, **characterized in that** the Liquid substrate is polyvinyl alcohol or vegetable glycerin.

3. Solid electrolyte, according to claim 1, **characterized in that** comprises potassium hydroxide as alkali salt and alum salt as salt acidic
